(19) Europäisches Patentamt
European Patent Office
Office européen des brevets

(11) **EP 4 628 934 A1**

(12) **EUROPÄISCHE PATENTANMELDUNG**

(43) Veröffentlichungstag:
**08.10.2025 Patentblatt 2025/41**

(21) Anmeldenummer: **25165635.1**

(22) Anmeldetag: **24.03.2025**

(51) Internationale Patentklassifikation (IPC):
***G01S 13/90*** *(2006.01)*

(52) Gemeinsame Patentklassifikation (CPC):
**G01S 13/9004; G01S 13/9011**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **04.04.2024 DE 102024109490**

(71) Anmelder: **Deutsches Zentrum für Luft- und Raumfahrt e.V.**
**53227 Bonn (DE)**

(72) Erfinder:
- **Scheiber, Rolf**
  **82178 Puchheim (DE)**
- **Grabs, Florian**
  **01067 Dresden (DE)**

(74) Vertreter: **Fink Numrich**
**Patentanwälte PartmbB**
**Paul-Gerhardt-Allee 24**
**81245 München (DE)**

(54) **VERFAHREN UND VORRICHTUNG ZUR RECHNERGESTÜTZTEN VERARBEITUNG EINES SAR-BILDS**

(57)    Die Erfindung betrifft Verfahren zur rechnergestützten Verarbeitung eines SAR-Bilds, wobei

a) das SAR-Bild einer zweidimensionalen Fourier-Transformation (2D-FFT) unterzogen wird, wodurch ein erstes spektrales Bild (SI1) erhalten wird;

b) das erste spektrale Bild (SI1) einer Refokussierung (RE) unterzogen wird, indem das erste spektrale Bild (SI1) mittels einer Azimut-Dekompression defokussiert wird und anschließend auf eine vorbestimmte Azimut-Mehrdeutigkeitsnummer fokussiert wird, wodurch ein zweites spektrales Bild (SI2) erhalten wird;

c) das zweite spektrale Bild (SI2) einer inversen zweidimensionalen Fourier-Transformation (2D-IFFT) unterzogen wird, wodurch ein zweites SAR-Bild (IM2) erhalten wird;

d) in dem zweiten SAR-Bild (IM2) eine oder mehrere Azimut-Mehrdeutigkeiten der vorbestimmten Azimut-Mehrdeutigkeitsnummer detektiert werden;

e) die Amplitudenwerte der Bildpunkte, die einer jeweiligen Azimut-Mehrdeutigkeit der vorbestimmten Azimut-Mehrdeutigkeitsnummer zugeordnet sind, im zweiten SAR-Bild (IM2) vermindert werden, wodurch ein drittes SAR-Bild (IM3) erhalten wird;

f) das dritte SAR-Bild (IM3) einer zweidimensionalen Fourier-Transformation (2D-FFT) unterzogen wird, wodurch ein drittes spektrales Bild (SI3) erhalten wird;

g) das dritte spektrale Bild (SI3) einer Refokussierung (IRE) unterzogen wird, welche invers zu der Refokussierung des Schritts b) ist, wodurch ein viertes spektrales Bild (SI4) erhalten wird;

h) das vierte spektrale Bild (SI4) einer inversen zweidimensionalen Fourier-Transformation (2D-IFFT) unterzogen wird, wodurch ein viertes SAR-Bild (IM4) erhalten wird.

Fig. 1

**Beschreibung**

Die Erfindung betrifft ein Verfahren und eine Vorrichtung zur rechnergestützten Verarbeitung eines SAR-Bilds.

SAR-Systeme (SAR = Synthetic Aperture Radar) ermöglichen die Fernerkundung der Erdoberfläche über die Erfassung von an der Erdoberfläche reflektierten Radarpulsen, die von einer Radareinrichtung ausgesendet werden, welche sich über der Erdoberfläche in einer sog. Azimut-Richtung bewegt. Der Begriff der Erdoberfläche ist dabei weit zu verstehen und kann gegebenenfalls auch die Oberfläche eines anderen Himmelskörpers (vorzugsweise eines anderen Planeten) als der Erde betreffen.

Die mit einem SAR-System erfassten SAR-Rohdaten enthalten für eine Vielzahl der ausgesendeten Radarpulse, die mit entsprechenden Azimut-Positionen korrelieren, jeweils Datenabtastungen für eine Vielzahl von sog. Range-Positionen, welche unterschiedliche Abstände zwischen der Erdoberfläche und der Azimut-Richtung repräsentieren und demzufolge Radarechos aus unterschiedlichen Richtungen darstellen. Aus SAR-Rohdaten können in an sich bekannter Weise mit einer SAR-Prozessierung SAR-Bilder von der Erdoberfläche gewonnen werden. Im Rahmen der SAR-Prozessierung erfolgt eine Fokussierung der Datenabtastungen in Range-Richtung bzw. Azimut-Richtung basierend auf einer Range-Kompression bzw. Azimut-Kompression.

SAR-Bilder können Bildartefakte in der Form von Mehrdeutigkeiten (englisch: ambiguities) enthalten. Dabei unterscheidet man zwischen Range-Mehrdeutigkeiten und Azimut-Mehrdeutigkeiten. Range-Mehrdeutigkeiten resultieren aus Radarechos, deren Laufzeit (d.h. die Zeitdauer zwischen Aussenden des Radarpulses und Empfang des reflektierten Radarechos) um ein Einfaches bzw. Vielfaches des Pulswiederholintervalls der Radarpulse zueinander versetzt sind. Azimut-Mehrdeutigkeiten sind die Folge einer zu geringen Abtastung des Doppler-Spektrums in Azimut-Richtung, wobei das Doppler-Spektrum durch eine Frequenzverschiebung durch die Bewegung der Radareinrichtung (sog. Doppler-Effekt) verursacht ist. Insbesondere Regionen mit einer Vielzahl von punktförmigen Rückstreuern (z.B. städtische Gebiete mit großen Gebäuden) können störende mehrdeutige Radarechos erzeugen, die als Artefakte im SAR-Bild sichtbar werden.

Aus dem Stand der Technik sind unterschiedliche Verfahren bekannt, mit denen Azimut-Mehrdeutigkeiten in SAR-Bildern unterdrückt werden können. Beispielsweise werden in den Dokumenten [1] und [2] Azimut-Mehrdeutigkeiten dadurch gedämpft, dass ein entsprechendes SAR-Bild in den Range-Dopplerfrequenz-Raum konvertiert und daraufhin verändert wird. Nach Rücktransformation in den SAR-Bildbereich werden die Azimut-Mehrdeutigkeiten mit einer geeigneten Signalprozessierung detektiert und unterdrückt. Zur Detektion der Azimut-Mehrdeutigkeiten nutzt das Verfahren der Druckschrift [1] einen Schwellwert, wohingegen das Verfahren der Druckschrift [2] sowohl einen Schwellenwert als auch einen CFAR-Detektor verwendet (CFAR = Constant False Alarm Rate). Das Verfahren der Druckschrift [1] wird auf reine Phasenbilder des ursprünglichen SAR-Bilds angewendet, wohingegen das Verfahren des Dokuments [2] in Abhängigkeit von der Stärke der Rückstreuung im SAR-Bild ein reines Phasen-Bild oder das ursprüngliche SAR-Bild verarbeitet.

Aufgabe der Erfindung ist es, ein Verfahren und eine Vorrichtung zur rechnergestützten Verarbeitung eines SAR-Bilds zu schaffen, die Azimut-Mehrdeutigkeiten in dem SAR-Bild zuverlässig unterdrücken.

Diese Aufgabe wird durch das Verfahren gemäß Patentanspruch 1 bzw. die Vorrichtung gemäß Patentanspruch 9 gelöst. Weiterbildungen der Erfindung sind in den abhängigen Ansprüchen definiert.

Das erfindungsgemäße Verfahren dient zur rechnergestützten Verarbeitung eines SAR-Bilds. Dieses Bild stammt aus einer SAR-Akquisition, bei der Radarpulse von einer Radareinrichtung ausgesendet wurden, welche sich in eine Azimut-Richtung über der Erdoberfläche mit einer Azimut-Geschwindigkeit bewegt, wobei die Radarechos der Radarpulse durch die Radareinrichtung empfangen und erfasst wurden und aus den Radarechos das SAR-Bild ermittelt wurde. Die Ermittlung des SAR-Bilds erfolgt mit einer an sich bekannten Methodik unter Verwendung einer Range- und Azimut-Kompression, wodurch das SAR-Bild fokussiert wird. Das SAR-Bild enthält eine Vielzahl von Bildpunkten (oft auch als Pixel bezeichnet), wobei jeder Bildpunkt einen Amplitudenwert und einen Phasenwert für eine Azimut-Position entlang der Azimut-Richtung und eine Range-Position entlang einer Range-Richtung umfasst, wobei die Range-Richtung den Abstand zwischen der Azimut-Richtung und der Erdoberfläche repräsentiert. Der Amplitudenwert und der Phasenwert werden in dem SAR-Bild in der Regel über eine komplexwertige Zahl repräsentiert. Die soeben beschriebene SAR-Akquisition ist nicht Bestandteil des erfindungsgemäßen Verfahrens. Das erfindungsgemäße Verfahren dient vielmehr dazu, SAR-Bilder, die aus der SAR-Akquisition stammen, zur Unterdrückung von Azimut-Mehrdeutigkeiten weiterzuverarbeiten.

In einem Schritt a) des erfindungsgemäßen Verfahrens wird das SAR-Bild als ein erstes SAR-Bild einer zweidimensionalen Fourier-Transformation in Azimut-Richtung und Range-Richtung unterzogen, wodurch ein erstes spektrales Bild mit einer Vielzahl von spektralen Bildpunkten an jeweiligen spektralen Positionen erhalten wird, wobei eine spektrale Position durch eine Range-Frequenz und eine Azimut- bzw. Doppler-Frequenz charakterisiert ist. Analog zu den Bildpunkten des ersten SAR-Bilds umfasst ein spektraler Bildpunkt einen Amplitudenwert und einen Phasenwert.

In einem Schritt b) des erfindungsgemäßen Verfahrens wird das erste spektrale Bild einer Refokussierung unterzogen, indem dieses Bild mittels einer Azimut-Dekompression defokussiert wird und anschließend auf eine vorbestimmte Azimut-Mehrdeutigkeitsnummer fokussiert wird, wodurch ein zweites spektrales Bild erhalten wird. Es wird somit zunächst die zur Erzeugung des fokussierten SAR-Bilds angewandte und an sich bekannte Azimut-Kompression rückgängig gemacht. Anschließend erfolgt die Fokussierung auf eine vorbestimmte Azimut-Mehrdeutigkeitsnummer, welche eine vorgegebene Verschiebung der Azimut-Frequenz beschreibt, wobei eine Azimut-Mehrdeutigkeit der vorbestimmten Azimut-Mehrdeutigkeitsnummer um die vorgegebene Verschiebung gegenüber der Azimut-Frequenz verschoben ist, welche der Azimut-Position der Radarpulse des Hauptsignals (d.h. des Signals innerhalb des Fußabdrucks der Sendeantenne) im SAR-Bild entspricht. Die Anzahl der vorhandenen Azimut-Mehrdeutigkeiten für die vorbestimmte Azimut-Mehrdeutigkeitsnummer hängt von der Beschaffenheit des Bereichs der Erdoberfläche ab, der mit der SAR-Akquisition erfasst wird (insbesondere von den Orten von punktförmigen Streuern). Die Fokussierung auf eine vorbestimmte Azimut-Mehrdeutigkeitsnummer im spektralen Bild wird dadurch ermöglicht, dass die Azimut-Frequenzen von Azimut-Mehrdeutigkeiten im zweidimensionalen spektralen Raum bekannt sind. Insbesondere sind die Azimut-Frequenzen einer Azimut-Mehrdeutigkeit um ein Einfaches bzw. Mehrfaches der Pulswiederholfrequenz der ausgesendeten Radarpulse gegenüber den Azimut-Frequenzen verschoben, welche dem Hauptsignal im SAR-Bild entsprechen. Eine Azimut-Mehrdeutigkeitsnummer repräsentiert dabei der Anzahl von Pulswiederholfrequenzen der entsprechenden Verschiebung multipliziert mit dem Faktor -1 oder +1, wobei der Faktor -1 einer Verschiebung hin zu kleineren Azimut-Frequenzen und der Faktor +1 einer Verschiebung hin zu größeren Azimut-Frequenzen entspricht.

In einem Schritt c) des erfindungsgemäßen Verfahrens wird das zweite spektrale Bild einer inversen zweidimensionalen Fourier-Transformation unterzogen, wodurch ein zweites SAR-Bild im Ortsraum erhalten wird. In diesem SAR-Bild sind Azimut-Mehrdeutigkeiten entsprechend ihrer vorbestimmten Azimut-Mehrdeutigkeitsnummer fokussiert.

Um die Positionen von Azimut-Mehrdeutigkeiten der vorbestimmten Azimut-Mehrdeutigkeitsnummer zu bestimmen, werden in einem Schritt d) des erfindungsgemäßen Verfahrens in dem zweiten SAR-Bild eine oder mehrere Azimut-Mehrdeutigkeiten der vorbestimmten Azimut-Mehrdeutigkeitsnummer dadurch detektiert, dass Bildpunkte in dem zweiten SAR-Bild einer jeweiligen Azimut-Mehrdeutigkeit der vorbestimmten Azimut-Mehrdeutigkeitsnummer basierend auf einem vorgegebenen Schwellwertkriterium zugeordnet werden. Das Schwellwertkriterium ist derart ausgestaltet, dass es für einen jeweiligen Bildpunkt im zweiten SAR-Bild von dessen Amplitudenwert sowie den Amplitudenwerten der Bildpunkte in einer lokalen Bildumgebung um den jeweiligen Bildpunkt abhängt. Das Schwellwertkriterium berücksichtigt somit nicht rein den Amplitudenwert eines einzelnen Bildpunkts, sondern auch die Amplitudenwerte in dessen Umgebung, wodurch eine sehr zuverlässige Detektion einer entsprechenden Azimut-Mehrdeutigkeit der vorbestimmten Azimut-Mehrdeutigkeitsnummer erreicht werden kann.

In einem Schritt e) des erfindungsgemäßen Verfahrens werden die Amplitudenwerte der Bildpunkte, die einer jeweiligen Azimut-Mehrdeutigkeit (d.h. jeder der in Schritt d) detektierten Azimut-Mehrdeutigkeiten) der vorbestimmten Azimut-Mehrdeutigkeitsnummer zugeordnet sind, im zweiten SAR-Bild vermindert, wodurch ein drittes SAR-Bild erhalten wird. In einer bevorzugten Variante werden die Amplitudenwerte dabei ganz auf Null gesetzt. Alternativ ist es jedoch auch möglich, dass die Amplitudenwerte lediglich gedämpft werden.

In einem Schritt f) des erfindungsgemäßen Verfahrens wird das dritte SAR-Bild einer zweidimensionalen Fourier-Transformation unterzogen, wodurch ein drittes spektrales Bild erhalten wird.

Das dritte spektrale Bild wird in einem Schritt g) des erfindungsgemäßen Verfahrens einer Refokussierung unterzogen, welche invers zu der Refokussierung des Schritts b) ist, wodurch ein viertes spektrales Bild erhalten wird. Dieses vierte spektrale Bild ist analog zu dem ersten spektralen Bild auf das Hauptsignal und nicht auf die vorbestimmte Azimut-Mehrdeutigkeitsnummer fokussiert.

In einem Schritt h) wird das vierte spektrale Bild einer inversen zweidimensionalen Fourier-Transformation unterzogen, wodurch ein viertes SAR-Bild erhalten wird. Dieses SAR-Bild stellt das Endergebnis des erfindungsgemäßen Verfahrens dar. Das vierte SAR-Bild entspricht dem ursprünglichen ersten SAR-Bild, wobei jedoch die Azimut-Mehrdeutigkeiten entsprechend der vorbestimmten Azimut-Mehrdeutigkeitsnummer unterdrückt sind.

Das erfindungsgemäße Verfahren zeichnet sich dadurch aus, dass es zur Unterdrückung von Azimut-Mehrdeutigkeiten im zweidimensionalen Frequenzraum aus Range-Frequenz und Doppler-Frequenz arbeitet, wohingegen die Verfahren der Druckschriften [1] und [2] in Range-Richtung im Ortsraum und in Azimut-Richtung im Frequenzraum arbeiten. Darüber hinaus beruht die Verarbeitung im erfindungsgemäßen Verfahren immer auf dem ursprünglichen SAR-Bild, d.h. es werden keine reinen Phasenbilder des ursprünglichen SAR-Bilds erzeugt, wodurch Rechenzeit gespart wird. Darüber hinaus ermöglicht das Schwellwertkriterium des erfindungsgemäßen Verfahrens eine zuverlässige Detektion von Azimut-Mehrdeutigkeiten einer vorbestimmten Azimut-Mehrdeutigkeitsnummer, da es auch Amplitudenwerte von Bildpunkten in der Umgebung des jeweiligen Bildpunkts berücksichtigt und dabei vorzugsweise das ursprüngliche erste SAR-Bild mit dem refokussierten zweiten SAR-Bild vergleicht.

Das vorgegebene Schwellwertkriterium, das im erfindungsgemäßen Verfahren verwendet wird, kann auf verschiedene Weise definiert sein. Insbesondere kann das vorgegebene Schwellwertkriterium gegebenenfalls auch mehrere Schwellwertkriterien und in diesem Sinne Teilkriterien enthalten.

In einer bevorzugten Variante des erfindungsgemäßen Verfahrens wird für die Detektion einer jeweiligen Azimut-Mehrdeutigkeit der vorbestimmten Azimut-Mehrdeutigkeitsnummer in Schritt d) ein erstes Schwellwertkriterium überprüft, wobei für einen jeweiligen Bildpunkt im zweiten SAR-Bild die Erfüllung des ersten Schwellwertkriteriums für dessen Zuordnung zu der jeweiligen Azimut-Mehrdeutigkeit der vorbestimmten Azimut-Mehrdeutigkeitsnummer erforderlich ist. Die Erfüllung des ersten Schwellwertkriteriums für den jeweiligen Bildpunkt ist somit ein notwendiges Kriterium, jedoch nicht zwangsläufig auch ein hinreichendes Kriterium für die Zuordnung dieses Bildpunkts zu der jeweiligen Azimut-Mehrdeutigkeit der vorbestimmten Azimut-Mehrdeutigkeitsnummer. Sofern das vorgegebene Schwellwertkriterium nur das erste Schwellwertkriterium enthält, ist dieses jedoch ein hinreichendes Kriterium zur Zuordnung des jeweiligen Bildpunkts zu der jeweiligen Azimut-Mehrdeutigkeit der vorbestimmten Azimut-Mehrdeutigkeitsnummer.

Das erste Schwellwertkriterium ist dann erfüllt, wenn der Quotient aus einer statistischen Kenngröße des jeweiligen Bildpunkts im zweiten SAR-Bild und der gleichen statistischen Kenngröße des jeweiligen Bildpunkts im ersten SAR-Bild einen ersten Schwellwert überschreitet. Die statistische Kenngröße des jeweiligen Bildpunkts im zweiten SAR-Bild (und analog auch im ersten SAR-Bild) enthält ein Maß für die Streuung der Amplitudenwerte der Bildpunkte in einem lokalen Bildausschnitt um den jeweiligen Bildpunkt im zweiten SAR-Bild. Entsprechend enthält die statistische Kenngröße des jeweiligen Bildpunkts im ersten SAR-Bild ein Maß für die Streuung der Amplitudenwerte der Bildpunkte in dem lokalen Bildausschnitt um den jeweiligen Bildpunkt im ersten SAR-Bild. In einer bevorzugten Variante deckt der lokale Bildausschnitt den jeweiligen Bildpunkt und eine Anzahl von Bildpunkten in dessen Nachbarschaft ab.

In einer besonders bevorzugten Variante umfasst die statistische Kenngröße Mittelwerte über die Bildpunkte des lokalen Bildausschnitts um den jeweiligen Bildpunkt im zweiten SAR-Bild und analog im ersten SAR-Bild. Dabei ist die statistische Kenngröße ein Quotient aus einer ersten Größe und einer zweiten Größe, wobei die erste Größe ein Maß für den Mittelwert (ggf. der Mittelwert selbst) einer Abweichung einer dritten Größe, welche ein Maß für den Amplitudenwert eines Bildpunkts ist, von dem Mittelwert der dritten Größe ist, und die zweite Größe ein Maß für den Mittelwert (ggf. der Mittelwert selbst) der dritten Größe ist. Ein entsprechender Mittelwert kann z.B. den arithmetischen Mittelwert repräsentieren. In diesem Fall kann die statistische Kenngröße durch das statistische Maß des Variationskoeffizienten repräsentiert werden. Nichtsdestotrotz kann der Mittelwert gegebenenfalls auch ein gewichteter Mittelwert sein. Vorzugsweise nimmt dabei die Gewichtung der Bildpunkte mit größerem Abstand zum jeweiligen Bildpunkt ab. Das Maß für den Amplitudenwert kann z.B. durch den Amplitudenwert selbst oder durch das Quadrat des Amplitudenwerts repräsentiert werden.

In einer weiteren bevorzugten Ausgestaltung des erfindungsgemäßen Verfahrens wird für die Detektion einer jeweiligen Azimut-Mehrdeutigkeit der vorbestimmten Azimut-Mehrdeutigkeitsnummer in Schritt d) ein zweites Schwellwertkriterium überprüft, wobei das zweite Schwellwertkriterium gegebenenfalls auch das einzige Kriterium sein kann. Die Erfüllung des zweiten Schwellwertkriteriums für einen jeweiligen Bildpunkt ist für dessen Zuordnung zu der jeweiligen Azimut-Mehrdeutigkeit der vorbestimmten Azimut-Mehrdeutigkeitsnummer erforderlich, d.h. das zweite Schwellwertkriterium stellt ein notwendiges, jedoch nicht zwangsläufig hinreichendes Kriterium zur Zuordnung des jeweiligen Bildpunkts zu der jeweiligen Azimut-Mehrdeutigkeit der vorbestimmten Azimut-Mehrdeutigkeitsnummer dar. Im Falle, dass das vorgegebene Schwellwertkriterium nur das zweite Schwellwertkriterium enthält, ist dieses auch ein hinreichendes Kriterium für die Zuordnung des jeweiligen Bildpunkts zu der jeweiligen Azimut-Mehrdeutigkeit der vorbestimmten Azimut-Mehrdeutigkeitsnummer.

Das zweite Schwellwertkriterium ist dann erfüllt, wenn ein Maß für den Amplitudenwert des jeweiligen Bildpunkts in dem zweiten SAR-Bild einen zweiten Schwellwert überschreitet, der von einem Mittelwert der Maße der Amplitudenwerte der Bildpunkte in einem lokalen Bildbereich um den jeweiligen Bildpunkt im zweiten SAR-Bild abhängt. Das Maß für den Amplitudenwert kann z.B. der Amplitudenwert selbst oder das Quadrat des Amplitudenwerts sein. Der Mittelwert der Maße der Amplitudenwerte der Bildpunkte kann z.B. der arithmetische Mittelwert, jedoch gegebenenfalls auch ein gewichteter Mittelwert sein. Vorzugsweise nimmt dabei die Gewichtung der Bildpunkte mit größerem Abstand zum jeweiligen Bildpunkt ab. Der lokale Bildbereich muss nicht dem oben beschriebenen lokalen Bildausschnitt des ersten Schwellwertkriteriums entsprechen. Insbesondere muss der lokale Bildbereich den jeweiligen Bildpunkt, für den das zweite Schwellwertkriterium überprüft wird, nicht zwangsläufig umfassen. Ferner muss der lokale Bildbereich auch nicht unmittelbar an den jeweiligen Bildpunkt angrenzen, sondern es können dazwischen Bildpunkte liegen, die nicht zum lokalen Bildbereich gehören.

In einer bevorzugten Variante ist der zweite Schwellwert der Mittelwert (vorzugsweise der arithmetische Mittelwert) über die Maße der Amplitudenwerte in dem lokalen Bildbereich um den jeweiligen Bildpunkt im zweiten SAR-Bild multipliziert mit einem konstanten Faktor größer Null.

In einer weiteren bevorzugten Variante enthält das vorgegebene Schwellwertkriterium sowohl das erste Schwellwertkriterium als auch das zweite Schwellwertkriterium, wobei in Schritt d) ein jeweiliger Bildpunkt in dem zweiten SAR-Bild einer jeweiligen Azimut-Mehrdeutigkeit der vorbestimmten Azimut-Mehrdeutigkeitsnummer dann zugeordnet wird, wenn für den jeweiligen Bildpunkt sowohl das erste Schwellwertkriterium als auch das zweite Schwellwertkriterium erfüllt ist. Hierdurch kann eine sehr zuverlässige Detektion von Azimut-Mehrdeutigkeiten der vorbestimmten Azimut-Mehrdeutigkeitsnummer erreicht werden.

In einer weiteren bevorzugten Variante werden die Schritte a) bis h) des erfindungsgemäßen Verfahrens als Iterationen ein oder mehrere Male für unterschiedliche vorbestimmte Azimut-Mehrdeutigkeitsnummern wiederholt, wobei bei jeder Wiederholung als erstes SAR-Bild das vierte SAR-Bild aus der letzten Iteration verwendet wird. Mit einem derartigen iterativen Verfahren können Azimut-Mehrdeutigkeiten unterschiedlicher Azimut-Mehrdeutigkeitsnummern aus dem SAR-Bild entfernt werden.

In einer weiteren, besonders bevorzugten Ausführungsform basiert die Refokussierung des ersten spektralen Bilds in Schritt b) auf folgender Funktion, mit der jeder Bildpunkt im ersten spektralen Bild multipliziert wird:

$$H_{refoc,n}(k_x, \omega_r; r_0) = \frac{H_n^*(k_x, \omega_r; r_0)}{H_0^*(k_x, \omega_r; r_0)} \cdot H_{shift,az,n}(k_x; r_0) \cdot H_{shift,rg}(\omega_r; r_0),$$

wobei

$$H_n^*(k_x, \omega_r; r_0) = \exp\left( j \cdot r(f_D = 0, n; r_0) \cdot \sqrt{\left(\frac{2(\omega_r + \omega_0)}{c}\right)^2 - \left(k_x + \frac{n \cdot 2\pi \cdot PRF}{v_0}\right)^2} \right),$$

mit

$$r(f_D, n; r_0) = \frac{r_0}{\sqrt{1 + \frac{(n \cdot PRF + f_D)^2 \lambda^2}{4 v_0^2 - (n \cdot PRF + f_D)^2 \lambda^2}}},$$

$$H_0^*(k_x, \omega_r; r_0) = \exp\left( j \cdot r_0 \cdot \sqrt{\left(\frac{2(\omega_r + \omega_0)}{c}\right)^2 - k_x^2} \right),$$

wobei $k_x = \frac{2\pi f_{az}}{v_0}$ die Wellenzahl in Azimut-Richtung ist, wobei $f_{az}$ die Azimut-Frequenz (d.h. Doppler-Frequenz) des jeweiligen Bildpunkts im ersten spektralen Bild und $v_0$ die Azimut-Geschwindigkeit ist;

wobei $\omega_r$ die Range-Frequenz des jeweiligen Bildpunkts im ersten spektralen Bild ist;

wobei $r_0$ die Range-Position des Mittelpunkts des ersten SAR-Bilds ist;

wobei $\omega_0 = 2\pi f_0$, wobei $f_0$ die Mittenfrequenz der Radareinrichtung ist;

wobei PRF die Pulswiederholfrequenz der von der Radareinrichtung ausgesendeten Radarpulse ist;

wobei n eine ganze Zahl ungleich Null ist und die vorbestimmte Azimut-Mehrdeutigkeitsnummer repräsentiert;

wobei c die Lichtgeschwindigkeit ist;

wobei $f_D$ die Dopplermittenfrequenz ist, welche dem Schwerpunkt des Doppler-spektrums entspricht;

wobei $\lambda = c/f_0$ die Wellenlänge für die Frequenz $f_0$ ist;

wobei

$$H_{shift,az,n}(k_x; r_0)$$

$$= \exp\left( -j \cdot k_x \right.$$

$$\left. \cdot \left( \Delta x(f_D, n; r = r(f_D, n; r_0)) - \Delta x(f_D, n = 0; r = r_0) \right) \right)$$

mit

$$\Delta x(f_D, n; r) = \frac{-(f_D + n \cdot PRF) \cdot \lambda \cdot r}{2v_0 \sqrt{1 - \left(\frac{\lambda \cdot (f_D + n \cdot PRF)}{2v_0}\right)^2}},$$

wobei

$$H_{shift,rg}(\omega_r; r_0) = \exp(-j \cdot \omega_r \cdot \Delta r(f_D, n; r_0)/c),$$

$$\text{mit} \quad \Delta r(f_D, n; r_0) = 2 \cdot \left( \sqrt{r^2(f_D, n; r_0) + \Delta x^2(f_D, n; r = r(f_D, n; r_0))} \; - \right.$$

$$\left. \sqrt{r_0^2 + \Delta x^2(f_D, n = 0; r = r_0)} \right).$$

Mit der obigen Funktion, die auch von den Erfindern getestet wurde, wird eine sehr gute Fokussierung auf die entsprechende vorbestimmte Azimut-Mehrdeutigkeitsnummer und hierdurch eine gute Detektierbarkeit der Azimut-Mehrdeutigkeiten der vorbestimmten Azimut-Mehrdeutigkeitsnummer gewährleistet.

Neben dem oben beschriebenen Verfahren betrifft die Erfindung eine Vorrichtung zur rechnergestützten Verarbeitung eines SAR-Bilds, das aus einer SAR-Akquisition stammt, bei der Radarpulse von einer Radareinrichtung ausgesendet wurden, welche sich in eine Azimut-Richtung über der Erdoberfläche mit einer Azimut-Geschwindigkeit bewegt, wobei die Radarechos der Radarpulse durch die Radareinrichtung empfangen und erfasst wurden und aus den Radarechos das SAR-Bild ermittelt wurde, wobei das SAR-Bild eine Vielzahl von Bildpunkten umfasst und jeder Bildpunkt einen Amplitudenwert und einen Phasenwert für eine Azimut-Position entlang der Azimut-Richtung und eine Range-Position entlang einer Range-Richtung umfasst, wobei die Range-Richtung den Abstand zwischen der Azimut-Richtung und der Erdoberfläche repräsentiert.

Die erfindungsgemäße Vorrichtung ist derart ausgestaltet, dass sie zur Durchführung der Schritte a) bis h) des erfindungsgemäßen Verfahrens eingerichtet ist. Mit anderen Worten umfasst die Vorrichtung eine geeignete Signalverarbeitungseinheit, um die Schritte a) bis h) durchzuführen.

In einer besonders bevorzugten Ausführungsform ist die erfindungsgemäße Vorrichtung dazu eingerichtet, eine oder mehrere bevorzugte Varianten des erfindungsgemäßen Verfahrens durchzuführen.

Die Erfindung betrifft darüber hinaus ein Computerprogrammprodukt mit einem auf einem maschinenlesbaren Träger gespeicherten Programmcode zur Durchführung des erfindungsgemäßen Verfahrens bzw. einer oder mehrerer bevorzugter Varianten des erfindungsgemäßen Verfahrens, wenn der Programmcode auf einem Rechner ausgeführt wird.

Darüber hinaus umfasst die Erfindung ein Computerprogramm mit einem Programmcode zur Durchführung des erfindungsgemäßen Verfahrens bzw. einer oder mehrerer bevorzugter Varianten des erfindungsgemäßen Verfahrens, wenn der Programmcode auf einem Rechner ausgeführt wird.

Ein Ausführungsbeispiel der Erfindung wird nachfolgend anhand der beigefügten Figuren detailliert beschrieben.

Es zeigen:

Fig. 1    eine schematische Darstellung, anhand der das im Rahmen der Erfindung verwendete SAR-Prinzip erläutert wird; und

Fig. 2    ein Ablaufdiagramm, das die Durchführung einer Variante des erfindungsgemäßen Verfahrens verdeutlicht.

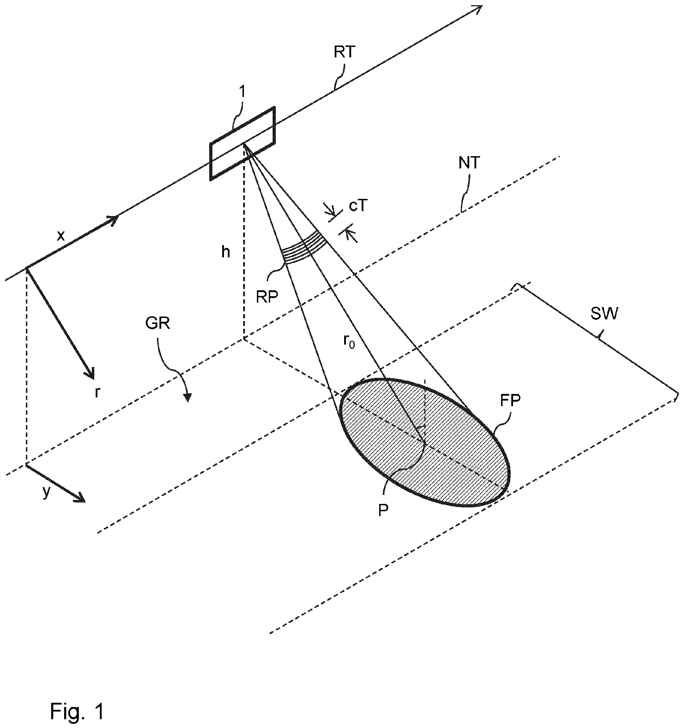

Fig. 1 zeigt in schematischer Darstellung eine SAR-Radareinrichtung 1, welche als rechteckige Apertur angedeutet ist und je nach Ausgestaltung eine oder mehrere Antennen umfasst. In dem dargestellten Szenario befindet sich die Radareinrichtung auf einem (nicht gezeigten) Satelliten, der sich in der Höhe h entlang der Radarbahn RT oberhalb der Erdoberfläche GR bewegt. Die Richtung der Radarbahn entspricht dabei der an sich bekannten Azimut-Richtung, die in Fig. 1 mit Bezugszeichen x bezeichnet ist. Anstatt die Radareinrichtung mittels eines Satelliten zu bewegen, besteht ggf. auch die Möglichkeit, hierzu ein anderes Flugobjekt zu verwenden, wie z.B. ein Flugzeug. Ferner kann die Radareinrichtung einen Radarsender und einen Radarempfänger umfassen, die räumlich getrennt sind und sich beispielsweise auf unterschiedlichen Flugobjekten befinden, deren relative Positionen zueinander bekannt sind.

Die Radareinrichtung 1 sendet Radarpulse RP in aufeinander folgenden Pulswiederholintervallen mit vorgegebener Pulswiederholfrequenz in schräger Richtung auf die Erdoberfläche GR aus. Der größte Teil der Energie eines jeweiligen Radarpulses ist dabei auf die elliptische Fläche FP auf der Erdoberfläche gerichtet. Diese Fläche wird in der Regel als "Footprint" bzw. "Fußabdruck" der Radareinrichtung bzw. der zugeordneten Radarantenne bezeichnet.

Gemäß Fig. 1 weist ein jeweiliger Radarpuls RP eine vorgegebene Pulsdauer T auf, so dass der Radarpuls die räumliche Ausdehnung cT hat, wobei c der Lichtgeschwindigkeit entspricht. Im Rahmen einer SAR-Messung werden von der Erdoberfläche zurückgestreute Radarechos der Radarpulse RP durch die Radareinrichtung 1 während ihrer Bewegung entlang der Bahn RT empfangen und erfasst. Auf diese Weise werden Informationen über die Erdoberfläche in dem Streifen SW (englisch: "swath") detektiert. Die Radareinrichtung ist dabei derart ausgestaltet, dass sie sowohl zum Aussenden von Radarpulsen als auch zum Empfang entsprechender Radarechos eingerichtet ist. Die von der Radareinrichtung erfassten Radarechos hängen von der Form und Beschaffenheit der Erdoberfläche ab und ermöglichen mit einer bekannten nachgeschalteten Signalverarbeitung die Berechnung von SAR-Bildern der Erdoberfläche.

Vor der nachgeschalteten Signalverarbeitung liegen die erfassten Radarechos nach einer Analog-Digital-Wandlung als sog. SAR-Rohdaten vor. Diese Rohdaten sind Datenabtastungen, welche die Amplitude und die Phase der abgetasteten Radarechos enthalten. Die Rohdaten sind dabei in einer zweidimensionalen Matrix angeordnet, wobei eine Dimension der Matrix dem jeweiligen ausgesendeten Radarpuls (repräsentiert durch eine Pulsnummer) entspricht und die andere Dimension der Matrix eine Zeitverzögerung repräsentiert, welche die Zeitdauer darstellt, die ein abgetastetes Radarecho zur Ausbreitung von der Radareinrichtung zur Erdoberfläche und zurück zur Radareinrichtung 1 benötigt. Mit anderen Worten wird durch diese Zeitdauer die sog. Slant-Range (Schrägentfernung) r repräsentiert, welche dem Abstand zwischen der Radareinrichtung und dem Streupunkt des Radarechos auf der Erdoberfläche entspricht. Dieser Abstand ist somit gleichzusetzen mit einer Richtung, aus der das abgetastete Radarecho von der Erdoberfläche GR zur Radareinrichtung 1 gelangt.

In dem Szenario der Fig. 1 ist beispielhaft die Reflexion eines Radarechos an dem Streupunkt P auf der Erdoberfläche angedeutet. Die Slant-Range dieses Radarechos ist dabei mit $r_0$ bezeichnet. Die Slant-Range steht in einer geometrischen Beziehung zu der sog. Ground-Range (Bodenentfernung), die in Fig. 1 mit y bezeichnet ist und dem Abstand zwischen der Nadir-Bahn NT und dem entsprechenden Streupunkt repräsentiert. Der Wert einer Slant-Range r kann somit eindeutig in den Wert einer entsprechenden Ground-Range y umgerechnet werden. Die Nadir-Bahn NT ist dabei die senkrechte Projektion der Radarbahn RT auf die Erdoberfläche GR.

Wie bereits erwähnt, werden die SAR-Rohdaten einer nachgeschalteten Signalverarbeitung unterzogen. Je nach Ausgestaltung kann diese Signalverarbeitung bereits im Satelliten erfolgen, wobei anschließend die verarbeiteten Informationen zu einer Bodenstation auf der Erdoberfläche gesendet werden. Ebenso ist es möglich, dass die SAR-Rohdaten ohne Nachverarbeitung an eine Bodenstation übersendet werden, wobei in der Bodenstation die Nachverarbeitung durchgeführt wird, um aus den Rohdaten entsprechende SAR-Bilder zu gewinnen. Die Nachverarbeitung umfasst zwei Filter-Operationen, die entlang der Range-Richtung r bzw. y und entlang der Azimut-Richtung x durchgeführt werden. Die Filter-Operation entlang der Range-Richtung wird oftmals als Range-Kompression und die Filter-Operation entlang der Azimut-Richtung als Azimut-Kompression bezeichnet. Mit diesen Operationen wird eine Fokussierung der SAR-Rohdaten erreicht, wodurch fokussierte SAR-Bilder erhalten werden.

Die Range-Kompression und die Azimut-Kompression sind an sich bekannte Verarbeitungsschritte zur Fokussierung der SAR-Rohdaten. Bei der Azimut-Kompression macht man sich die Tatsache zu Nutze, dass Streupunkte auf der Erdoberfläche mit unterschiedlichen Azimut-Winkeln in Bezug auf die Radarbahn RT aufgrund des Doppler-Effekts Frequenzverschiebungen in den Radarechos aufweisen. Durch die Analyse des Doppler-Frequenzspektrums kann ein Streupunkt auf der Erdoberfläche in der Azimut-Richtung lokalisiert werden. Die Azimut-Kompression führt somit zu einer Schärfung der Daten in der Azimut-Richtung.

In den fokussierten SAR-Bildern können Artefakte in der Form sog. Range-Mehrdeutigkeiten und Azimut-Mehrdeutigkeiten auftreten. Range-Mehrdeutigkeiten werden durch Radarechos verursacht, deren Laufzeiten sich um ein Einfaches oder Vielfaches des Pulswiederholintervalls der Radarpulse unterscheiden. Im Unterschied hierzu entstehen Azimut-Mehrdeutigkeiten durch eine unzureichende Abtastung des Doppler-Frequenzspektrums, das durch das Azimut-Antennendiagramm des Radarsenders der SAR-Radareinrichtung moduliert ist. Azimut-Mehrdeutigkeiten treten dabei bei einer Azimut- bzw. Doppler-Frequenz auf, die um ein Einfaches bzw. Mehrfaches der Pulswiederholfrequenz gegenüber der Azimut-Frequenz verschoben ist, welche der Azimut-Position der Radarpulse des Hauptsignals im SAR-Bild entspricht.

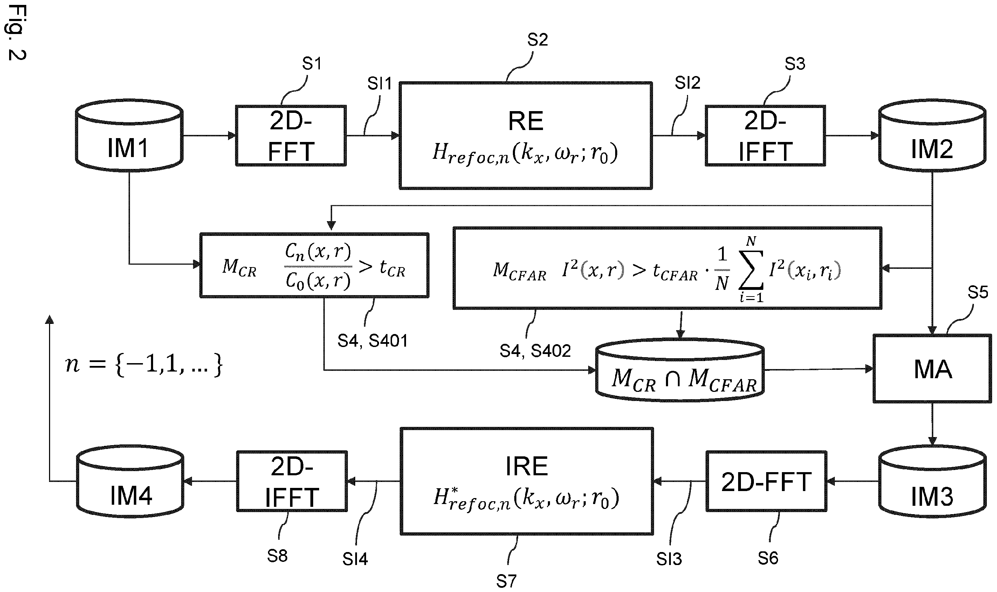

Ziel des nachfolgend beschriebenen Verfahrens ist es nunmehr, aus einem fokussierten SAR-Bild, das wie oben beschrieben gewonnen wurde, Azimut-Mehrdeutigkeiten zu entfernen. In der hier beschriebenen Ausführungsform wird hierzu das Verfahren der Fig. 2 verwendet. Im Rahmen dieses Verfahrens wird ein fokussiertes SAR-Bild verarbeitet, das in Fig. 2 als IM1 bezeichnet ist und ein erstes SAR-Bild darstellt. Das SAR-Bild IM1 ist dabei ein sog. SLC-Bild (SLC = Single Look Complex), dessen Bildpunkte komplexwertig sind und jeweils einen Amplitudenwert und Phasenwert repräsentieren.

Zunächst werden Azimut-Mehrdeutigkeiten der Azimut-Mehrdeutigkeitsnummer n, welche im Folgenden auch als vorbestimmte Azimut-Mehrdeutigkeitsnummer bezeichnet wird, aus dem Bild entfernt. Die Nummer n, welche positiv oder negativ sein kann, gibt dabei die Azimut-Frequenz der entsprechenden Mehrdeutigkeit an, d.h. sie repräsentiert die Anzahl von Pulswiederholfrequenzen, um welche die Azimut-Frequenz einer Azimut-Mehrdeutigkeit gegenüber der Azimut-Frequenz für die Position der Mehrdeutigkeit im Bild IM1 verschoben ist. Diese Frequenzverschiebung ist bekannt. Es ist jedoch nicht bekannt, an welcher Stelle sich die Azimut-Mehrdeutigkeit im SAR-Bild IM1 befindet.

In einem Schritt S1 des Verfahrens der Fig. 2 wird zunächst eine zweidimensionale Fourier-Transformation in der Form einer 2D-FFT (FFT = Fast Fourier Transformation) auf das Bild IM1 angewendet. Alle nachfolgend beschriebenen Fourier-Transformationen basieren dabei auf einer 2D-FFT bzw. einer inversen 2D-FFT (in Fig. 2 als 2D-IFFT bezeichnet).

Durch die Fourier-Transformation des Schritts S1 wird ein erstes spektrales Bild SI1 erhalten. Dieses spektrale Bild enthält Bildpunkte für entsprechende Range-Frequenzen und Azimut-Frequenzen, wobei jeder Bildpunkt wiederum durch einen Amplitudenwert und Phasenwert repräsentiert wird. Das spektrale Bild SI1 wird anschließend in einem Schritt S2 einer Refokussierung RE unterzogen, um hierdurch das Bild auf die entsprechende Azimut-Mehrdeutigkeit im zweidimensionalen Frequenzraum zu fokussieren. Herkömmliche Verfahren zur Unterdrückung von Azimut-Mehrdeutigkeiten arbeiten nicht im zweidimensionalen Frequenzraum.

Im Rahmen der Refokussierung RE wird jeder Bildpunkt in dem ersten spektralen Bild SI1 mit folgender Funktion multipliziert:

$$H_{refoc,n}(k_x, \omega_r; r_0) = \frac{H_n^*(k_x, \omega_r; r_0)}{H_0^*(k_x, \omega_r; r_0)} \cdot H_{shift,az,n}(k_x; r_0) \cdot H_{shift,rg}(\omega_r; r_0) \qquad (1)$$

wobei

$$H_n^*(k_x, \omega_r; r_0) = \exp\left(j \cdot r(f_D = 0, n; r_0) \cdot \sqrt{\left(\frac{2(\omega_r + \omega_0)}{c}\right)^2 - \left(k_x + \frac{n \cdot 2\pi \cdot PRF}{v_0}\right)^2}\right) \quad (2)$$

mit

$$r(f_D, n; r_0) = \frac{r_0}{\sqrt{1 + \frac{(n \cdot PRF + f_D)^2 \lambda^2}{4\, v_0^2 - (n \cdot PRF + f_D)^2 \lambda^2}}},$$

$$H_0^*(k_x, \omega_r; r_0) = \exp\left(j \cdot r_0 \cdot \sqrt{\left(\frac{2(\omega_r + \omega_0)}{c}\right)^2 - k_x^2}\right),$$

wobei $k_x = \frac{2\pi f_{az}}{v_0}$ die Wellenzahl in Azimut-Richtung ist, wobei $f_{az}$ die Azimut-Frequenz des jeweiligen Bildpunkts im ersten spektralen Bild SI1 und $v_0$ die Azimut-Geschwindigkeit ist;

wobei $\omega_r$ die Range-Frequenz des jeweiligen Bildpunkts im ersten spektralen Bild SI1 ist;

wobei $r_0$ die Range-Position des Mittelpunkts des ersten SAR-Bilds IM1 ist;

wobei $\omega_0 = 2\pi f_0$, wobei $f_0$ die Mittenfrequenz der Radareinrichtung 1 ist;

wobei PRF die Pulswiederholfrequenz der von der Radareinrichtung 1 ausgesendeten Radarpulse RP ist;

wobei n eine ganze Zahl ungleich Null ist und die vorbestimmte Azimut-Mehrdeutigkeitsnummer repräsentiert;

wobei c die Lichtgeschwindigkeit ist;

wobei $f_D$ die Dopplermittenfrequenz ist $\left(f_D - \frac{PRF}{2} < k_x v_0 / 2\pi \leq f_D + PRF/2\right)$;

wobei $\lambda = c/f_0$ die Wellenlänge für die Frequenz $f_0$ ist.

Im Rahmen dieser Refokussierung RE wird das spektrale Bild SI1 mittels einer Azimut-Dekompression defokussiert. Hierfür wird der Phasenanteil $H_0^*(k_x, \omega_r; r_0)$ der bekannten Transfer-Funktion genutzt, welche bei der Azimut-Kompression verwendet wurde. Dieser Phasenanteil findet sich in der obigen Gleichung (1) im Nenner, wodurch die Defokussierung erreicht wird. Die Fokussierung des defokussierten Bilds auf die Azimut-Mehrdeutigkeiten mit der Azimut-Mehrdeutigkeitsnummer n erfolgt mittels der Funktion $H_n^*(k_x, \omega_r; r_0)$, die sich in der obigen Gleichung (1) im Zähler findet und gemäß Gleichung (2) einen entsprechenden Term enthält, der die Frequenzverschiebung der Azimut-Mehrdeutigkeit um das n-Fache der Pulswiederholfrequenz PRF berücksichtigt.

Die obige Funktion $H_n^*(k_x, \omega_r; r_0)$ positioniert die Azimut-Mehrdeutigkeit eines entsprechenden Objekts an die Position, an der sich das Objekt im Ortsraum ursprünglich befand. Diese Verschiebung wird mit der Funktion $H_{shift,az,n}(k_x; r_0)$ kompensiert, welche das refokussierte Bild auf dem ursprünglichen Bild anordnet. Die Funktion $H_{shift,az,n}(k_x; r_0)$ lautet wie folgt:

$$H_{shift,az,n}(k_x; r_0) = \exp\left(-j \cdot k_x \cdot \left(\Delta x\big(f_D, n; r = r(f_D, n; r_0)\big) - \Delta x(f_D, n = 0; r = r_0)\right)\right),$$

mit

$$\Delta x(f_D, n; r) = \frac{-(f_D + n \cdot PRF) \cdot \lambda \cdot r}{2v_0 \sqrt{1 - \left(\frac{\lambda \cdot (f_D + n \cdot PRF)}{2v_0}\right)^2}},$$

Darüber hinaus wird die Funktion $H_{shift,rg}(\omega_r; r_0)$ benötigt, um eine Zentrierung in der Range-Richtung basierend auf einer an sich bekannten Kompensation der sog. "Range Cell Migration" durchzuführen. Die Funktion $H_{shift,rg}(\omega_r; r_0)$ lautet wie folgt:

$$H_{shift,rg}(\omega_r; r_0) = \exp(-j \cdot \omega_r \cdot \Delta r(f_D, n; r_0)/c)$$

mit

$$\Delta r(f_D, n; r_0) = 2 \cdot \left(\sqrt{r^2(f_d, n; r_0) + \Delta x^2\big(f_D, n; r = r(f_D, n; r_0)\big)} - \sqrt{r_0^2 + \Delta x^2(f_D, n = 0; r = r_0)}\right),$$

Durch die Refokussierung RE gemäß Schritt S2 erhält man das zweite spektrale Bild SI2, das in Schritt S3 einer inversen zweidimensionalen Fouriertransformation 2D-IFFT unterzogen wird. Hieraus resultiert ein zweites SAR-Bild IM2 im Ortsraum, das auf die vorbestimmte Azimut-Mehrdeutigkeitsnummer fokussiert ist. Zur Detektion von Azimut-Mehrdeutigkeiten mit dieser Azimut-Mehrdeutigkeitsnummer wird anschließend der Schritt S4 durchgeführt, der zwei Teilschritte S401 und S402 enthält. In Teilschritt S401 wird ein erstes Schwellwertkriterium $M_{CR}$ überprüft. Hierfür wird für jeden Bildpunkt im zweiten SAR-Bild IM2 die statistische Kenngröße $C_n(x, r)$ und analog für den entsprechenden Bildpunkt im ursprünglichen ersten SAR-Bild IM1 die gleiche statistische Kenngröße $C_0(x, r)$ ermittelt und der Quotient aus diesen Kenngrößen berechnet. Die Kenngrößen für den jeweiligen Bildpunkt lauten dabei wie folgt:

$$C_{\{0,n\}}(x, r) = \frac{\sqrt{A[I^2(x,r) - A\{I^2(x,r)\}]}}{A\{I^2(x,r)\}}$$

Dabei bezeichnet A den arithmetischen Mittelwert über Bildpunkte eines rechteckigen Bildausschnitts um den jeweiligen Bildpunkt mit den Koordinaten (x, r) im zweiten SAR-Bild IM2 bzw. im ersten SAR-Bild IM1, wobei der Bildpunkt, der gemäß dem ersten Schwellwertkriterium gerade überprüft wird, das Zentrum des Bildausschnitts bildet. In einer Variante kann zur Berechnung der statistischen Kenngröße anstatt des arithmetischen Mittelwerts auch ein gewichteter Mittelwert verwendet werden, indem eine Glockenkurve über den rechteckigen Bildausschnitt zur Gewichtung der Bildpunkte gelegt wird. Demzufolge wird die Gewichtung der weiter entfernt vom Zentrum des Bildausschnitts liegenden Bildpunkte kleiner. Die Berechnung der obigen statistischen Kenngröße wird in einer bevorzugten Variante durch eine schnelle Faltung (englisch: fast convolution) im Frequenzraum implementiert.

Die obige statistische Kenngröße korreliert mit dem lokalen Kontrast im zweiten SAR-Bild IM2 bzw. im ersten SAR-Bild IM1. Je stärker der lokale Kontrast im zweiten SAR-Bild IM2 im Vergleich zum ersten SAR-Bild IM1 ist, desto wahrscheinlicher befindet sich am jeweiligen Bildpunkt eine Azimut-Mehrdeutigkeit. Demzufolge wird das erste Schwellwertkriterium basierend auf folgender Gleichung implementiert:

$$M_{CR}(x, r) = \frac{c_n(x,r)}{c_0(x,r)} > t_{CR}$$

Sollte der obige Quotient $M_{CR}(x, r)$ größer als der Schwellwert $t_{CR}$ sein, wird der gerade überprüfte Bildpunkt als ein Kandidaten-Bildpunkt für eine Azimut-Mehrdeutigkeit eingestuft.

Nach Durchführung des Schritts S401 erhält man eine Vielzahl von Kandidaten-Bildpunkten für eine Azimut-Mehrdeutigkeit. Diese Kandidaten-Bildpunkte werden anschließend in Schritt S402 basierend auf einem zweiten Schwellwertkriterium $M_{CFAR}(x, r)$ überprüft. Das zweite Schwellwertkriterium ist durch einen an sich bekannten CFAR-Detektor (CFAR = Constant False Alarm Rate) inspiriert und betrachtet wiederum einen lokalen Bildbereich von Bildpunkten um den gerade überprüften Bildpunkt. Im Unterschied zu dem lokalen Bildausschnitt, der im ersten Schwellwertkriterium des Schritts S401 verwendet wird, enthält der lokale Bildbereich den gerade überprüften Bildpunkt nicht. Vielmehr ist der lokale Bildbereich über Schutz-Bildpunkte (englisch: guard pixels) von dem gerade überprüften Bildpunkt beabstandet.

Das zweite Schwellwertkriterium $M_{CFAR}(x, r)$ berücksichtigt den Umstand, dass ein Schwellwert zur Detektion einer Azimut-Mehrdeutigkeit umso höher gesetzt werden sollte, je größer das lokale Hintergrundrauschen, d.h. die mittlere (quadratische) Amplitude in der lokalen Bildumgebung ist. Demzufolge lautet das zweite Schwellwertkriterium wie folgt:

$$M_{CFAR}(x,r) = I^2(x,r) > t_{CFAR} \cdot \frac{1}{N} \sum_{i=1}^{N} I^2(x_i, r_i) \qquad (3)$$

Der Schwellwert in der obigen Gleichung (3) ist durch die Multiplikation der Konstanten $t_{CFAR}$ mit der mittleren quadratischen Amplitude $I^2$ der $N$ Bildpunkte im lokalen Bildbereich um den gerade geprüften Bildpunkt gegeben. Überschreitet die quadratische Amplitude $I^2$ des gerade betrachteten Bildpunkts diesen Schwellwert, wird der Bildpunkt der Azimut-Mehrdeutigkeit zugeordnet. Das obige zweite Schwellwertkriterium wird nur auf die Kandidaten-Bildpunkte angewendet, die sich aus dem ersten Schwellwertkriterium ergeben. Es wird somit die Schnittmenge aus beiden Schwellwertkriterien gebildet, wie in Fig. 2 durch $M_{CR} \cap M_{CFAR}$ angedeutet ist. Ein Bildpunkt wird folglich nur dann einer Azimut-Mehrdeutigkeit entsprechend der vorbestimmten Azimut-Mehrdeutigkeitsnummer zugeordnet, wenn er sowohl das erste als auch das zweite Schwellwertkriterium gemäß den Schritten S401 und S402 erfüllt.

Schritt S4 identifiziert entsprechende Bildpunkte in dem zweiten SAR-Bild IM2, welche Azimut-Mehrdeutigkeiten der vorbestimmten Azimut-Mehrdeutigkeitsnummer zugeordnet sind. Basierend auf Schritt S5 wird eine Maskierung MA für diese Bildpunkte durchgeführt, d.h. die Amplitudenwerte dieser Bildpunkte werden auf Null gesetzt. Alternativ können die Amplitudenwerte auch lediglich geeignet gedämpft werden. Durch den Schritt S5 wird ein drittes maskiertes SAR-Bild IM3 erhalten, aus dem die Azimut-Mehrdeutigkeiten der vorbestimmten Azimut-Mehrdeutigkeitsnummer entfernt sind.

In Schritt S6 wird auf dieses Bild wieder eine zweidimensionale Fourier-Transformation 2D-FFT angewendet, die zu einem dritten spektralen Bild SI3 führt. Auf dieses dritte spektrale Bild SI3 wird in Schritt S7 eine Refokussierung IRE angewendet, die invers zu der Refokussierung des Schritts S2 ist. Mit anderen Worten erfolgt die Refokussierung IRE basierend auf einer Funktion $H^*_{refoc,n}(k_x, \omega_r; r_0)$, welche das Komplex-Konjugierte der Funktion der Refokussierung RE ist. Diese inverse Refokussierung IRE macht die Fokussierung auf die Azimut-Mehrdeutigkeit rückgängig und fokussiert das Bild wieder auf das Hauptsignal. Es wird somit ein viertes fokussiertes spektrales Bild SI4 erhalten, das aufgrund der Maskierung MA die Azimut-Mehrdeutigkeiten der vorbestimmten Azimut-Mehrdeutigkeitsnummer nicht mehr enthält.

In Schritt S8 wird das spektrale Bild SI4 mittels einer inversen zweidimensionalen Fourier-Transformation 2D-IFFT wieder in den Ortsraum transformiert, wodurch ein viertes SAR-Bild IM4 erhalten wird. Dieses SAR-Bild stellt das Endergebnis des Verfahrens der Fig. 2 dar. In diesem SAR-Bild sind die Azimut-Mehrdeutigkeiten der vorbestimmten Azimut-Mehrdeutigkeitsnummer im Vergleich zum ursprünglichen Bild IM1 entfernt bzw. unterdrückt.

Die Festlegung geeigneter Werte für die obigen Schwellen $t_{CR}$ bzw. $t_{CFAR}$ des ersten und des zweiten Schwellwertkriteriums liegt im Rahmen von fachmännischem Handeln. Insbesondere können die Schwellen geeignet durch Experimente festgelegt werden. Beispielsweise kann ein um den Faktor 2 überabgetasteter SAR-Rohdatensatz betrachtet werden, aus dem ein SAR-Bild ohne Azimut-Mehrdeutigkeiten resultiert. Die Abtastung dieses Datensatzes wird dann um den Faktor 2 reduziert. Aus diesem SAR-Rohdatensatz wird dann das entsprechende SAR-Bild gewonnen, das Azimut-Mehrdeutigkeiten enthält. Dieses Bild wird dem Verfahren der Fig. 2 unter Verwendung verschiedener Werte für die Schwellen $t_{CR}$ und $t_{CFAR}$ unterzogen. Das daraus resultierende SAR-Bild IM4 wird dann mit dem SAR-Bild ohne Azimut-Mehrdeutigkeiten verglichen. In einer bevorzugten Variante werden die Kohärenzen zwischen diesen beiden Bildern für verschiedene Werte der Schwellen $t_{CR}$ und $t_{CFAR}$ ermittelt. Diejenigen Schwellwerte, die zu der größten Gesamtkohärenz führen, werden dann zur Detektion der Azimut-Mehrdeutigkeit im Verfahren der Fig. 2 genutzt.

Das durch das Verfahren der Fig. 2 erhaltene Bild IM4 kann anschließend als neues Bild IM1 ein oder mehrmals dem Verfahren der Fig. 2 unterzogen werden, wobei das Verfahren dann für eine andere Azimut-Mehrdeutigkeitsnummer durchgeführt wird. Durch diese iterative Wiederholung können vorhandene Azimut-Mehrdeutigkeiten unterschiedlicher Nummer bzw. Ordnung n aus dem Bild entfernt werden.

Die im Vorangegangenen beschriebene Ausführungsform des erfindungsgemäßen Verfahrens weist eine Reihe von Vorteilen auf. Insbesondere wird ein einfaches und effizientes Verfahren geschaffen, um Azimut-Mehrdeutigkeiten aus SAR-Bildern zu entfernen bzw. diese zu unterdrücken. Das Verfahren eignet sich dabei zur Verarbeitung von SAR-Bildern beliebiger SAR-Systeme, welche sich sowohl auf Flugzeugen als auch auf Satelliten befinden können. Das Verfahren wurde von den Erfindern anhand von SAR-Bildern eines SAR-Systems auf einem Flugzeug entwickelt, aber auch auf Daten eines SAR-Satellitensystems getestet. Es hat sich gezeigt, dass mit dem Verfahren sehr gut Azimut-Mehrdeutigkeiten aus SAR-Bildern entfernt werden können.

Literaturverzeichnis

[1] N. Oishi, K. Suwa, Azimuth Ambiguity Detection and Suppression in SAR Images, Proc. IGARSS 2019, Seiten 676-681,

[2] W. Xuejiao, Q. Xiaolan, C. Lei, W. Jiyun und C. Qi, An Improved Azimuth Ambiguity Suppression Method for SAR Based on Ambiguity Area Imaging and Detection, in IEEE Journal of Selected Topics in Applied Earth Observations and Remote Sensing, Vol. 15, Seiten 8155-8169, 2022

**Patentansprüche**

1. Verfahren zur rechnergestützten Verarbeitung eines SAR-Bilds, das aus einer SAR-Akquisition stammt, bei der Radarpulse (RP) von einer Radareinrichtung (1) ausgesendet wurden, welche sich in eine Azimut-Richtung (x) über der Erdoberfläche (GR) mit einer Azimut-Geschwindigkeit bewegt, wobei die Radarechos der Radarpulse (RP) durch die Radareinrichtung (1) empfangen und erfasst wurden und aus den Radarechos das SAR-Bild ermittelt wurde, wobei das SAR-Bild eine Vielzahl von Bildpunkten umfasst und jeder Bildpunkt einen Amplitudenwert und einen Phasenwert für eine Azimut-Position entlang der Azimut-Richtung (x) und eine Range-Position (r) entlang einer Range-Richtung (r) umfasst, wobei die Range-Richtung (r) den Abstand zwischen der Azimut-Richtung (x) und der Erdoberfläche (GR) repräsentiert, wobei

a) das SAR-Bild als ein erstes SAR-Bild (IM1) einer zweidimensionalen Fourier-Transformation (2D-FFT) in Azimut-Richtung (x) und Range-Richtung (r) unterzogen wird, wodurch ein erstes spektrales Bild (SI1) mit einer Vielzahl von spektralen Bildpunkten an jeweiligen spektralen Positionen mit Range-Frequenz und Azimut-Frequenz erhalten wird;

b) das erste spektrale Bild (SI1) einer Refokussierung (RE) unterzogen wird, indem das erste spektrale Bild (SI1) mittels einer Azimut-Dekompression defokussiert wird und anschließend auf eine vorbestimmte Azimut-Mehrdeutigkeitsnummer fokussiert wird, wodurch ein zweites spektrales Bild (SI2) erhalten wird;

c) das zweite spektrale Bild (SI2) einer inversen zweidimensionalen Fourier-Transformation (2D-IFFT) unterzogen wird, wodurch ein zweites SAR-Bild (IM2) erhalten wird;

d) in dem zweiten SAR-Bild (IM2) eine oder mehrere Azimut-Mehrdeutigkeiten der vorbestimmten Azimut-Mehrdeutigkeitsnummer detektiert werden, indem Bildpunkte in dem zweiten SAR-Bild (IM2) einer jeweiligen Azimut-Mehrdeutigkeit der vorbestimmten Azimut-Mehrdeutigkeitsnummer basierend auf einem vorgegebenen Schwellwertkriterium ($M_{CR}$, $M_{CFAR}$) zugeordnet werden, welches für einen jeweiligen Bildpunkt im zweiten SAR-Bild (IM2) von dessen Amplitudenwert sowie den Amplitudenwerten der Bildpunkte in einer lokalen Bildumgebung um den jeweiligen Bildpunkt abhängt;

e) die Amplitudenwerte der Bildpunkte, die einer jeweiligen Azimut-Mehrdeutigkeit der vorbestimmten Azimut-Mehrdeutigkeitsnummer zugeordnet sind, im zweiten SAR-Bild (IM2) vermindert werden, wodurch ein drittes SAR-Bild (IM3) erhalten wird;

f) das dritte SAR-Bild (IM3) einer zweidimensionalen Fourier-Transformation (2D-FFT) unterzogen wird, wodurch ein drittes spektrales Bild (SI3) erhalten wird;

g) das dritte spektrale Bild (SI3) einer Refokussierung (IRE) unterzogen wird, welche invers zu der Refokussierung des Schritts b) ist, wodurch ein viertes spektrales Bild (SI4) erhalten wird;

h) das vierte spektrale Bild (SI4) einer inversen zweidimensionalen Fourier-Transformation (2D-IFFT) unterzogen wird, wodurch ein viertes SAR-Bild (IM4) erhalten wird.

2. Verfahren nach Anspruch 1, **dadurch gekennzeichnet, dass** für die Detektion einer jeweiligen Azimut-Mehrdeutigkeit der vorbestimmten Azimut-Mehrdeutigkeitsnummer in Schritt d) ein erstes Schwellwertkriterium ($M_{CR}$) überprüft wird, wobei für einen jeweiligen Bildpunkt im zweiten SAR-Bild (IM2) die Erfüllung des ersten Schwellwertkriteriums ($M_{CR}$) für dessen Zuordnung zu der jeweiligen Azimut-Mehrdeutigkeit der vorbestimmten Azimut-Mehrdeutigkeitsnummer erforderlich ist, wobei das erste Schwellwertkriterium ($M_{CR}$) dann erfüllt ist, wenn der Quotient aus einer statistischen Kenngröße ($C_n(x, r)$) des jeweiligen Bildpunkts im zweiten SAR-Bild (IM2) und der gleichen statistischen Kenngröße ($C_0(x, r)$) des jeweiligen Bildpunkts im ersten SAR-Bild (IM1) einen ersten Schwellwert ($t_{CR}$) überschreitet, wobei die statistische Kenngröße ($C_n(x, r)$) des jeweiligen Bildpunkts im zweiten SAR-Bild (IM2) ein Maß für die Streuung der Amplitudenwerte der Bildpunkte in einem lokalen Bildausschnitt um den jeweiligen Bildpunkt im zweiten SAR-Bild (IM2) enthält.

3. Verfahren nach Anspruch 2, **dadurch gekennzeichnet, dass** die statistische Kenngröße ($C_n(x, r)$, $C_0(x, r)$ ) des jeweiligen Bildpunkts im zweiten SAR-Bild (IM2) die Mittelwerte über die Bildpunkte des lokalen Bildausschnitts um den jeweiligen Bildpunkt umfasst und ein Quotient aus einer ersten Größe und einer zweiten Größe ist, wobei die erste Größe ein Maß für den Mittelwert einer Abweichung einer dritten Größe, welche ein Maß für den Amplitudenwert eines Bildpunkts ist, von dem Mittelwert der dritten Größe ist, und die zweite Größe ein Maß für den Mittelwert der dritten Größe ist.

4. Verfahren nach einem der vorhergehenden Ansprüche, **dadurch gekennzeichnet, dass** für die Detektion einer jeweiligen Azimut-Mehrdeutigkeit der vorbestimmten Azimut-Mehrdeutigkeitsnummer in Schritt d) ein zweites Schwellwertkriterium ($M_{CFAR}$) überprüft wird, wobei für einen jeweiligen Bildpunkt die Erfüllung des zweiten Schwellwertkriteriums ($M_{CFAR}$) für dessen Zuordnung zu der jeweiligen Azimut-Mehrdeutigkeit der vorbestimmten Azimut-Mehrdeutigkeitsnummer erforderlich ist, wobei das zweite Schwellwertkriterium ($M_{CFAR}$) dann erfüllt ist, wenn ein Maß für den Amplitudenwert des jeweiligen Bildpunkts in dem zweiten SAR-Bild (IM2) einen zweiten Schwellwert überschreitet, der von einem Mittelwert der Maße der Amplitudenwerte der Bildpunkte in einem lokalen Bildbereich um den jeweiligen Bildpunkt im zweiten SAR-Bild (IM2) abhängt.

5. Verfahren nach Anspruch 4, **dadurch gekennzeichnet, dass** der zweite Schwellwert der Mittelwert über die Maße der Amplitudenwerte in dem lokalen Bildbereich um den jeweiligen Bildpunkt im zweiten SAR-Bild (IM2) multipliziert mit einem konstanten Faktor größer Null ist.

6. Verfahren nach Anspruch 4 oder 5 in Kombination mit Anspruch 2 oder 3, **dadurch gekennzeichnet, dass** in Schritt d) ein jeweiliger Bildpunkt in dem zweiten SAR-Bild (IM2) einer jeweiligen Azimut-Mehrdeutigkeit der vorbestimmten Azimut-Mehrdeutigkeitsnummer zugeordnet wird, wenn für den jeweiligen Bildpunkt sowohl das erste Schwellwertkriterium als auch das zweite Schwellwertkriterium ($M_{CFAR}$) erfüllt ist.

7. Verfahren nach einem der vorhergehenden Ansprüche, **dadurch gekennzeichnet, dass** die Schritte a) bis h) als Iterationen ein oder mehrere Male für unterschiedliche vorbestimmte Azimut-Mehrdeutigkeitsnummern wiederholt werden, wobei bei jeder Wiederholung als erstes SAR-Bild (IM1) das vierte SAR-Bild (IM4) aus der letzten Iteration verwendet wird.

8. Verfahren nach einem der vorhergehenden Ansprüche, **dadurch gekennzeichnet, dass** die Refokussierung des ersten spektralen Bilds (SI1) in Schritt b) auf folgender Funktion basiert, mit der jeder Bildpunkt im ersten spektralen Bild (SI1) multipliziert wird:

$$H_{refoc,n}(k_x, \omega_r; r_0) = \frac{H_n^*(k_x, \omega_r; r_0)}{H_0^*(k_x, \omega_r; r_0)} \cdot H_{shift,az,n}(k_x; r_0) \cdot H_{shift,rg}(\omega_r; r_0),$$

wobei

$$H_n^*(k_x, \omega_r; r_0) = \exp\left(j \cdot r(f_D = 0, n; r_0) \cdot \sqrt{\left(\frac{2(\omega_r+\omega_0)}{c}\right)^2 - \left(k_x + \frac{n \cdot 2\pi \cdot PRF}{v_0}\right)^2}\right),$$

mit

$$r(f_D, n; r_0) = \frac{r_0}{\sqrt{1 + \frac{(n \cdot PRF + f_D)^2 \lambda^2}{4\, v_0^2 - (n \cdot PRF + f_D)^2 \lambda^2}}},$$

$$H_0^*(k_x, \omega_r; r_0) = \exp\left(j \cdot r_0 \cdot \sqrt{\left(\frac{2(\omega_r+\omega_0)}{c}\right)^2 - k_x^2}\right),$$

wobei $k_x = \frac{2\pi f_{az}}{v_0}$ die Wellenzahl in Azimut-Richtung ist, wobei $f_{az}$ die Azimut-Frequenz des jeweiligen Bildpunkts im ersten spektralen Bild (SI1) und $v_0$ die Azimut-Geschwindigkeit ist;
wobei $\omega_r$ die Range-Frequenz des jeweiligen Bildpunkts im ersten spektralen Bild (SI1) ist;
wobei $r_0$ die Range-Position des Mittelpunkts des ersten SAR-Bilds (IM1) ist;
wobei $\omega_0 = 2\pi f_0$, wobei $f_0$ die Mittenfrequenz der Radareinrichtung (1) ist;
wobei PRF die Pulswiederholfrequenz der von der Radareinrichtung (1) ausgesendeten Radarpulse (RP) ist;
wobei n eine ganze Zahl ungleich Null ist und die vorbestimmte Azimut-Mehrdeutigkeitsnummer repräsentiert;
wobei c die Lichtgeschwindigkeit ist;
wobei $f_D$ die Dopplermittenfrequenz ist, welche dem Schwerpunkt des Dopplerspektrums entspricht;
wobei $\lambda = c/f_0$ die Wellenlänge für die Frequenz $f_0$ ist;
wobei

$$H_{shift,az,n}(k_x; r_0)$$

$$= \exp\left(-j \cdot k_x\right.$$

$$\left. \cdot \left(\Delta x(f_D, n; r = r(f_D, n; r_0)) - \Delta x(f_D, n = 0; r = r_0)\right)\right)$$

mit

$$\Delta x(f_D, n; r) = \frac{-(f_D + n \cdot PRF) \cdot \lambda \cdot r}{2v_0 \sqrt{1 - \left(\frac{\lambda \cdot (f_D + n \cdot PRF)}{2v_0}\right)^2}},$$

wobei

$$H_{shift,rg}(\omega_r; r_0) = \exp(-j \cdot \omega_r \cdot \Delta r(f_D, n; r_0)/c)$$

mit

$$\Delta r(f_D, n; r_0) = 2 \cdot \left(\sqrt{r^2(f_d, n; r_0) + \Delta x^2(f_D, n; r = r(f_D, n; r_0))} - \sqrt{r_o^2 + \Delta x^2(f_D, n = 0; r = r_0)}\right).$$

**9.** Vorrichtung zur rechnergestützten Verarbeitung eines SAR-Bilds, das aus einer SAR-Akquisition stammt, bei der Radarpulse (RP) von einer Radareinrichtung (1) ausgesendet wurden, welche sich in eine Azimut-Richtung (x) über der Erdoberfläche (GR) mit einer Azimut-Geschwindigkeit bewegt, wobei die Radarechos der Radarpulse (RP) durch die Radareinrichtung (1) empfangen und erfasst wurden und aus den Radarechos das SAR-Bild ermittelt wurde, wobei das SAR-Bild eine Vielzahl von Bildpunkten umfasst und jeder Bildpunkt einen Amplitudenwert und einen Phasenwert für eine Azimut-Position entlang der Azimut-Richtung (x) und eine Range-Position (r) entlang einer Range-Richtung (r) umfasst, wobei die Range-Richtung (r) den Abstand zwischen der Azimut-Richtung (x) und der Erdoberfläche (GR) repräsentiert, wobei die Vorrichtung zur Durchführung eines Verfahrens eingerichtet ist, bei dem

a) das SAR-Bild als ein erstes SAR-Bild (IM1) einer zweidimensionalen Fourier-Transformation (2D-FFT) in Azimut-Richtung (x) und Range-Richtung (r) unterzogen wird, wodurch ein erstes spektrales Bild (SI1) mit einer Vielzahl von spektralen Bildpunkten an jeweiligen spektralen Positionen mit Range-Frequenz und Azimut-Frequenz erhalten wird;

b) das erste spektrale Bild (SI1) einer Refokussierung (RE) unterzogen wird, indem das erste spektrale Bild (SI1) mittels einer Azimut-Dekompression defokussiert wird und anschließend auf eine vorbestimmte Azimut-Mehrdeutigkeitsnummer fokussiert wird, wodurch ein zweites spektrales Bild (SI2) erhalten wird;

c) das zweite spektrale Bild (SI2) einer inversen zweidimensionalen Fourier-Transformation (2D-IFFT) unterzogen wird, wodurch ein zweites SAR-Bild (IM2) erhalten wird;

d) in dem zweiten SAR-Bild (IM2) eine oder mehrere Azimut-Mehrdeutigkeiten der vorbestimmten Azimut-Mehrdeutigkeitsnummer detektiert werden, indem Bildpunkte in dem zweiten SAR-Bild (IM2) einer jeweiligen Azimut-Mehrdeutigkeit der vorbestimmten Azimut-Mehrdeutigkeitsnummer basierend auf einem vorgegebenen Schwellwertkriterium ($M_{CR}$, $M_{CFAR}$) zugeordnet werden, welches für einen jeweiligen Bildpunkt im zweiten SAR-Bild (IM2) von dessen Amplitudenwert sowie den Amplitudenwerten der Bildpunkte in einer lokalen Bildumgebung um den jeweiligen Bildpunkt abhängt;

e) die Amplitudenwerte der Bildpunkte, die einer jeweiligen Azimut-Mehrdeutigkeit der vorbestimmten Azimut-Mehrdeutigkeitsnummer zugeordnet sind, im zweiten SAR-Bild (IM2) vermindert werden, wodurch ein drittes SAR-Bild (IM3) erhalten wird;

f) das dritte SAR-Bild (IM3) einer zweidimensionalen Fourier-Transformation (2D-FFT) unterzogen wird, wodurch ein drittes spektrales Bild (SI3) erhalten wird;

g) das dritte spektrale Bild (SI3) einer Refokussierung (IRE) unterzogen wird, welche invers zu der Refokussierung des Schritts b) ist, wodurch ein viertes spektrales Bild (SI4) erhalten wird;

h) das vierte spektrale Bild (SI4) einer inversen zweidimensionalen Fourier-Transformation (2D-IFFT) unterzogen wird, wodurch ein viertes SAR-Bild (IM4) erhalten wird.

**10.** Vorrichtung nach Anspruch 9, welche derart ausgestaltet ist, dass mit der Vorrichtung ein Verfahren nach einem der Ansprüche 2 bis 8 durchführbar ist.

**11.** Computerprogrammprodukt mit einem auf einem maschinenlesbaren Träger gespeicherten Programmcode zur Durchführung eines Verfahrens nach einem der Ansprüche 1 bis 8, wenn der Programmcode auf einem Rechner ausgeführt wird.

**12.** Computerprogramm mit einem Programmcode zur Durchführung eines Verfahrens nach einem der Ansprüche 1 bis 8, wenn der Programmcode auf einem Rechner ausgeführt wird.

Fig. 1

Fig. 2

Europäisches Patentamt
European Patent Office
Office européen des brevets

# EUROPÄISCHER RECHERCHENBERICHT

**Nummer der Anmeldung**

EP 25 16 5635

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2023/143828 A1 (ICEYE OY [FI]) 3. August 2023 (2023-08-03) * Abbildungen 4a, 4b * ----- | 1-12 | INV. G01S13/90 |
| A,D | XUEJIAO WEN ET AL: "An Improved Azimuth Ambiguity Suppression Method for SAR Based on Ambiguity Area Imaging and Detection", IEEE JOURNAL OF SELECTED TOPICS IN APPLIED EARTH OBSERVATIONS AND REMOTE SENSING, Bd. 15, 1. Januar 2022 (2022-01-01), Seiten 8155-8169, XP093040817, USA ISSN: 1939-1404, DOI: 10.1109/JSTARS.2022.3207503 Gefunden im Internet: URL:https://ieeexplore.ieee.org/ielx7/4609 443/9656571/09894682.pdf?tp=&arnumber=9894 682&isnumber=9656571&ref=aHR0cHM6Ly9pZWVle HBsb3JlLmllZWUub3JnL2RvY3VtZW50Lzk4OTQ2ODI => * das ganze Dokument * ----- | 1-12 | |
| A,D | OISHI NOBORU ET AL: "Azimuth Ambiguity Detection and Suppression in SAR Images", IGARSS 2019 - 2019 IEEE INTERNATIONAL GEOSCIENCE AND REMOTE SENSING SYMPOSIUM, IEEE, 28. Juli 2019 (2019-07-28), Seiten 676-679, XP033655925, DOI: 10.1109/IGARSS.2019.8898514 [gefunden am 2019-11-13] * das ganze Dokument * ----- -/-- | 1-12 | RECHERCHIERTE SACHGEBIETE (IPC) G01S |

Der vorliegende Recherchenbericht wurde für alle Patentansprüche erstellt

| Recherchenort | Abschlußdatum der Recherche | Prüfer |
|---|---|---|
| München | 24. Juli 2025 | Rudolf, Hans |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

Seite 1 von 2

# EP 4 628 934 A1

**Europäisches Patentamt**
**European Patent Office**
**Office européen des brevets**

# EUROPÄISCHER RECHERCHENBERICHT

**Nummer der Anmeldung**

EP 25 16 5635

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DOGAN OZAN ET AL: "Experimental Demonstration of a Novel End-to-End SAR Range Ambiguity Suppression Method", 2022 IEEE RADAR CONFERENCE (RADARCONF22), IEEE, 21. März 2022 (2022-03-21), Seiten 1-6, XP034118389, DOI: 10.1109/RADARCONF2248738.2022.9764267 * das ganze Dokument * ----- | 1-12 | |
| A | US 2020/400813 A1 (OISHI NOBORU [JP] ET AL) 24. Dezember 2020 (2020-12-24) * das ganze Dokument * ----- | 1-12 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 24. Juli 2025 | Rudolf, Hans |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes Dokument

EPO FORM 1503 03.82 (P04C03)

Seite 2 von 2

18

**ANHANG ZUM EUROPÄISCHEN RECHERCHENBERICHT
ÜBER DIE EUROPÄISCHE PATENTANMELDUNG NR.**

EP 25 16 5635

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-07-2025

| Im Recherchenbericht angeführtes Patentdokument | Datum der Veröffentlichung | Mitglied(er) der Patentfamilie | Datum der Veröffentlichung |
|---|---|---|---|
| WO 2023143828 A1 | 03-08-2023 | EP 4473341 A1 | 11-12-2024 |
| | | GB 2615125 A | 02-08-2023 |
| | | IL 314443 A | 01-09-2024 |
| | | JP 2025504058 A | 06-02-2025 |
| | | KR 20240144920 A | 04-10-2024 |
| | | TW 202340748 A | 16-10-2023 |
| | | US 2025147174 A1 | 08-05-2025 |
| | | WO 2023143828 A1 | 03-08-2023 |
| US 2020400813 A1 | 24-12-2020 | CA 3092123 A1 | 19-09-2019 |
| | | EP 3751309 A1 | 16-12-2020 |
| | | JP 6448870 B1 | 09-01-2019 |
| | | JP WO2019176016 A1 | 16-04-2020 |
| | | US 2020400813 A1 | 24-12-2020 |
| | | WO 2019176016 A1 | 19-09-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **N. OISHI** ; **K. SUWA**. Azimuth Ambiguity Detection and Suppression in SAR Images. *Proc. IGARSS*, 2019, 676-681

- **W. XUEJIAO** ; **Q. XIAOLAN** ; **C. LEI** ; **W. JIYUN** ; **C. QI**. An Improved Azimuth Ambiguity Suppression Method for SAR Based on Ambiguity Area Imaging and Detection. *IEEE Journal of Selected Topics in Applied Earth Observations and Remote Sensing*, 2022, vol. 15, 8155-8169